# EUROPEAN PATENT APPLICATION

(11) **EP 4 575 399 A1**
(43) Date of publication of application: **25.06.2025**
(21) Application number: 23219695.6
(22) Date of filing: 22.12.2023
(51) Int. Cl.: G01C 21/00

(54) **METHOD, APPARATUS AND COMPUTER PROGRAM FOR GENERATING MAP DATA**

(71) Applicant: TomTom Traffic B.V., 1011 AC Amsterdam (NL)
(72) Inventor: Schmitt, Stephan, 1011 AC Amsterdam (NL); Grzywala, Jakub, 1011 AC Amsterdam (NL); Tenhagen, Robin, 1011 AC Amsterdam (NL); Kroll, Wolfram, 1011 AC Amsterdam (NL); Kesting, Arne, 1011 AC Amsterdam (NL)
(74) Representative: Swindell & Pearson Limited

(57) **Abstract**

Certain examples of the present disclosure relate to a computer-implemented method (100) for generating lane data (206) for use in a digital map (400), wherein the digital map comprises data representative of longitudinal portions of navigable elements of a network of navigable elements in a geographic region, and wherein each longitudinal portion is defined, in the digital map, at least in part by an edge between two nodes; the method comprising: receiving probe data (201_p) for a longitudinal portion (202_p) of a navigable element (202), wherein the probe data comprises a set of a plurality of positions of a plurality of devices that have traversed along the longitudinal portion of the navigable element; determining, based at least in part on the probe data, a subset of the probe data (201_s) for each of a plurality of segments (202_s) of the longitudinal portion of the navigable element of the network; determining, based at least in part on the subset of probe data for each segment, lane layout information (203_s) for each segment, wherein the lane layout information for each segment comprises information indicative of: a number, usage and/or geometry of lanes in the respective segment; determining, based at least in part on the lane layout information for each segment, at least first and second sections (204_1, 204_2) of the navigable element, wherein the first section of the navigable element comprises a first set of consecutive segments having a first lane layout (205_1), and wherein the second section of the navigable element comprises a second set of consecutive segments having a second lane layout (205_2) different to the first lane layout; generating, based at least in part on the first and second sections of the navigable element, lane data (206) for the navigable element wherein the lane data is indicative of a change of lane layout.

## Description

### TECHNOLOGICAL FIELD

Examples of the present disclosure relate to generating map data, in particular a method, an apparatus and a computer program for generating lane data for use in a digital map. Some examples, though without prejudice to the foregoing, relate to generating lane data indicative of a change of lane layout of one or more lanes of a road, not least for example lane level road closures, i.e. closures of one or more individual lanes of a road.

### BACKGROUND

Conventional methods for generating map data for a digital map (such as digital map representing/indicating a network of roads in a geographical area) are not always optimal.

Conventional temporary map data or map update data relating to changes in a road lane layout (e.g. a lane closure, lane blockage or lane re-opening) of a digitally mapped multi-lane road (wherein the multi-lane road is still traversable, albeit via only certain non-closed/blocked lanes of the multi-lane road) is not always optimal. Such conventional temporary map data/map update data may not be associated with or identify which specific particular lane(s) of the digitally mapped multi-lane road are affected. This may lead to sub-optimal alerts, guidance or routing along the multi-lane road (based on the conventional temporary map data/map update data) for helping drivers or autonomous driving systems to prepare in advance to more safely traverse road segment(s) effected by the closure/blockage, e.g., by early avoiding lanes that are closed or obstructed.

Typically, temporary changes in a road lane layout of a digitally mapped multi-lane road are not reflected in a digital map.

Conventional methods of generating map data, such as map data for a temporary change to a digital map (e.g. indicative of a lane closure or re-opening) are not always optimal.

It is useful to provide a method, apparatus and computer program to improve the generation of map data.

In some circumstances it can be desirable to improve the generation of map data for enabling an improvement in map accuracy, route guidance and/or route calculation. In some circumstances it can be desirable to provide "lane-level" map data, i.e. map data which is associated with one or more particular/individually specified lanes of a road (e.g. indicative of which particular/specific lane(s) of a road are closed/re-opened) - as compared to "road-level" map data which is associated with a road and which merely indicates closure/re-opening of one or more non-specified lanes of the road.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to various, but not necessarily all, examples of the disclosure there is provided a computer-implemented method for generating lane data for use in a digital map, wherein the digital map comprises data representative of longitudinal portions of navigable elements of a network of navigable elements in a geographic region, and wherein each longitudinal portion is defined, in the digital map, at least in part by an edge between two nodes; the method comprising:
receiving probe data for a longitudinal portion of a navigable element, wherein the probe data comprises a set of a plurality of positions of a plurality of devices that have traversed along the longitudinal portion of the navigable element;
determining, based at least in part on the probe data, a subset of the probe data for each of a plurality of segments of the longitudinal portion of the navigable element of the network;
determining, based at least in part on the subset of probe data for each segment, lane layout information for each segment, wherein the lane layout information for each segment comprises information indicative of: a number, usage and/or geometry of lanes in the respective segment;
determining, based at least in part on the lane layout information for each segment, at least first and second sections of the navigable element, wherein the first section of the navigable element comprises a first set of consecutive segments having a first lane layout, and wherein the second section of the navigable element comprises a second set of consecutive segments having a second lane layout different to the first lane layout;
generating, based at least in part on the first and second sections of the navigable element, lane data for the navigable element wherein the lane data is indicative of a change of lane layout.

According to at least some examples of the disclosure there is provided an apparatus for generating lane data for use in a digital map, wherein the digital map comprises data representative of longitudinal portions of navigable elements of a network of navigable elements in a geographic region, and wherein each longitudinal portion is defined, in the digital map, at least in part by an edge between two nodes; the apparatus comprising:
means for receiving probe data for a longitudinal portion of a navigable element, wherein the probe data comprises a set of a plurality of positions of a plurality of devices that have traversed along the longitudinal portion of the navigable element;
means for determining, based at least in part on the probe data, a subset of the probe data for each of a plurality of segments of the longitudinal portion of the navigable element of the network;
means for determining, based at least in part on the subset of probe data for each segment, lane layout information for each segment, wherein the lane layout information for each segment comprises information indicative of: a number, usage and/or geometry of lanes in the respective segment;
means for determining, based at least in part on the lane layout information for each segment, at least first and second sections of the navigable element, wherein the first section of the navigable element comprises a first set of consecutive segments having a first lane layout, and wherein the second section of the navigable element comprises a second set of consecutive segments having a second lane layout different to the first lane layout;
means for generating, based at least in part on the first and second sections of the navigable element, lane data for the navigable element wherein the lane data is indicative of a change of lane layout.

According to various, but not necessarily all, examples of the disclosure there is provided a chipset comprising processing circuitry configured to perform the above-mentioned method.

According to various, but not necessarily all, examples of the disclosure there is provided a module, circuitry, device, server and/or system comprising means for performing the above-mentioned method.

According to various, but not necessarily all, examples of the disclosure there is provided a computer program for generating lane data for use in a digital map, wherein the digital map comprises data representative of longitudinal portions of navigable elements of a network of navigable elements in a geographic region, and wherein each longitudinal portion is defined, in the digital map, at least in part by an edge between two nodes, wherein the computer program comprises instructions, which when executed by an apparatus, cause the apparatus to perform:
receiving probe data for a longitudinal portion of a navigable element, wherein the probe data comprises a set of a plurality of positions of a plurality of devices that have traversed along the longitudinal portion of the navigable element;
determining, based at least in part on the probe data, a subset of the probe data for each of a plurality of segments of the longitudinal portion of the navigable element of the network;
determining, based at least in part on the subset of probe data for each segment, lane layout information for each segment, wherein the lane layout information for each segment comprises information indicative of: a number, usage and/or geometry of lanes in the respective segment;
determining, based at least in part on the lane layout information for each segment, at least first and second sections of the navigable element, wherein the first section of the navigable element comprises a first set of consecutive segments having a first lane layout, and wherein the second section of the navigable element comprises a second set of consecutive segments having a second lane layout different to the first lane layout;
generating, based at least in part on the first and second sections of the navigable element, lane data for the navigable element wherein the lane data is indicative of a change of lane layout.

According to various, but not necessarily all, examples of the disclosure there is provided an apparatus for generating lane data for use in a digital map, wherein the digital map comprises data representative of longitudinal portions of navigable elements of a network of navigable elements in a geographic region, and wherein each longitudinal portion is defined, in the digital map, at least in part by an edge between two nodes, the apparatus comprising:
at least one processor; and
at least one memory storing instructions that, when executed by the at least one processor, cause the apparatus at least to:
   receive probe data for a longitudinal portion of a navigable element, wherein the probe data comprises a set of a plurality of positions of a plurality of devices that have traversed along the longitudinal portion of the navigable element;
   determine, based at least in part on the probe data, a subset of the probe data for each of a plurality of segments of the longitudinal portion of the navigable element of the network;
   determine, based at least in part on the subset of probe data for each segment, lane layout information for each segment, wherein the lane layout information for each segment comprises information indicative of: a number, usage and/or geometry of lanes in the respective segment;
   determine, based at least in part on the lane layout information for each segment, at least first and second sections of the navigable element, wherein the first section of the navigable element comprises a first set of consecutive segments having a first lane layout, and wherein the second section of the navigable element comprises a second set of consecutive segments having a second lane layout different to the first lane layout;
   generate, based at least in part on the first and second sections of the navigable element, lane data for the navigable element wherein the lane data is indicative of a change of lane layout.

According to various, but not necessarily all, examples of the disclosure there is provided a non-transitory computer readable medium for generating lane data for use in a digital map, wherein the digital map comprises data representative of longitudinal portions of navigable elements of a network of navigable elements in a geographic region, and wherein each longitudinal portion is defined, in the digital map, at least in part by an edge between two nodes, wherein the non-transitory computer readable medium is encoded with instructions that, when executed by at least one processor, causes at least the following to be performed:
receive probe data for a longitudinal portion of a navigable element, wherein the probe data comprises a set of a plurality of positions of a plurality of devices that have traversed along the longitudinal portion of the navigable element;
determine, based at least in part on the probe data, a subset of the probe data for each of a plurality of segments of the longitudinal portion of the navigable element of the network;
determine, based at least in part on the subset of probe data for each segment, lane layout information for each segment, wherein the lane layout information for each segment comprises information indicative of: a number, usage and/or geometry of lanes in the respective segment;
determine, based at least in part on the lane layout information for each segment, at least first and second sections of the navigable element, wherein the first section of the navigable element comprises a first set of consecutive segments having a first lane layout, and wherein the second section of the navigable element comprises a second set of consecutive segments having a second lane layout different to the first lane layout;
generate, based at least in part on the first and second sections of the navigable element, lane data for the navigable element wherein the lane data is indicative of a change of lane layout.

The following portion of this 'Brief Summary' section describes various features that can be features of any of the examples described in the foregoing portion of the `Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, the change of lane layout comprises at least one of:
a lane closure;
a lane re-opening;
a contraflow lane;
a change of lane usage;
a change of lane number; and
a change of lane geometry.
a lane closure;
a lane re-opening;
a contraflow lane;
a change of lane usage;
a change of lane number; and
a change of lane geometry.

In some but not necessarily all examples, the digital map provides an indication of a reference lane layout for the navigable element, and wherein the lane data for the navigable element layout comprises information indicative of at least one of:
a different lane layout to the reference lane layout;
a modification to the reference lane layout; and
a temporary adjustment to the reference lane layout.

In some but not necessarily all examples, the lane layout data for the navigable element comprises information indicative of at least one of:
which particular one or more lanes of the navigable element has undergone a change of lane layout; and
a position of the change of lane layout.

In some but not necessarily all examples, determining the at least first and second sections of the navigable element comprises determining, for each section:
a start position of the respective section;
an end position of the respective section; and
the lane layout of the respective section.

In some but not necessarily all examples, generating the lane data for the navigable element comprises generating a position associated with the change of lane layout, and wherein the position is based at least in part on a position:
where the first and second sections of the navigable element abut; or
between the first and second sections of the navigable element.

In some but not necessarily all examples, the method further comprises at least one or more of:
associating at least a portion of the probe data to the navigable element;
associating at least a portion of the probe data to the longitudinal portion of the navigable element; and
associating at least a portion of the probe data to each of the plurality of segments of the longitudinal portion of the navigable element.

In some but not necessarily all examples, each of the plurality of segments of the navigable element is associated with a length of the navigable element, and wherein the length is:
less than 100 metres;
less than 75 metres;
less than 50 metres; or
less than 25 metres.

In some but not necessarily all examples, a geometry of the navigable element is defined, in the digital map, via a reference line, and wherein determining lane layout information for each segment comprises:
determining, for each segment, a plurality of lateral offsets of the plurality of positions with respect to the reference line.

In some but not necessarily all examples, determining lane layout information for each segment comprises:
aggregating the plurality of lateral offsets for the respective segment;
determining a distribution of the plurality of lateral offsets for the respective segment; and/or
determining a histogram of the plurality of lateral offsets the respective segment.

In some but not necessarily all examples, determining lane layout information for each segment comprises determining, based at least in art on the distribution of the plurality of lateral offsets, at least one of:
a number of lanes of the respective segment;
a usage of one or more lanes of the respective segment; and
a geometry of one or more lanes of the respective segment.

In some but not necessarily all examples, the probe data comprises:
historical probe data;
substantially current probe data; and/or
real-time probe data.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
FIG. 1 schematically illustrates a method in accordance with an example of the subject matter described herein;
FIG. 2 schematically illustrates an apparatus in accordance with an example of the subject matter described herein;
Fig. 3 schematically illustrates a computer program in accordance with an example of the subject matter described herein;
Figs. 4 and 5 illustrate examples of probe data on a digital map;
Fig. 6 illustrates an example of probe data and a reference line for a portion of a road;
Fig. 7 illustrates an example of segments of a road portion;
Fig. 8 illustrates an example of a histogram of lateral offsets for a segment of a road portion;
Fig. 9 illustrates an example of map matching errors for a road portion along its length;
Fig. 10 illustrates an example of a histogram and distribution of lateral offsets for a segment of a road portion;
Fig. 11 illustrates an example of first and second homogeneous sections of a road portion;
Fig. 12 illustrates an example of changes in lane layout for the road portion of FIG. 11;
Fig. 13 illustrates an example of a change in lane layout for a portion of a road;
Fig. 14 illustrates another example of a change in lane layout for a portion of a road;
Fig. 15 illustrates an example of changes of lateral offsets for a single road segment over time; and
Fig. 16 illustrates example scenarios of use of lane data.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the description and drawings, a reference number without a subscript (e.g. 123) can be used as a generic reference to a feature or class/set of features. A reference number with a subscript (e.g. 123_1) can be used as a specific reference, e.g. to differentiate different instances of a feature or class/set of features. The subscript can comprise two digits including a first digit that labels a group of instances and a second digit that labels different instances in the group. A numerical type subscript index (e.g. 123_1) can be used to indicate a specific instance of a class/a member of a set; and a non-specific instance of the class (member of the set) can be referenced using the reference number with a variable type subscript index (e.g. 123_i).

### DETAILED DESCRIPTION

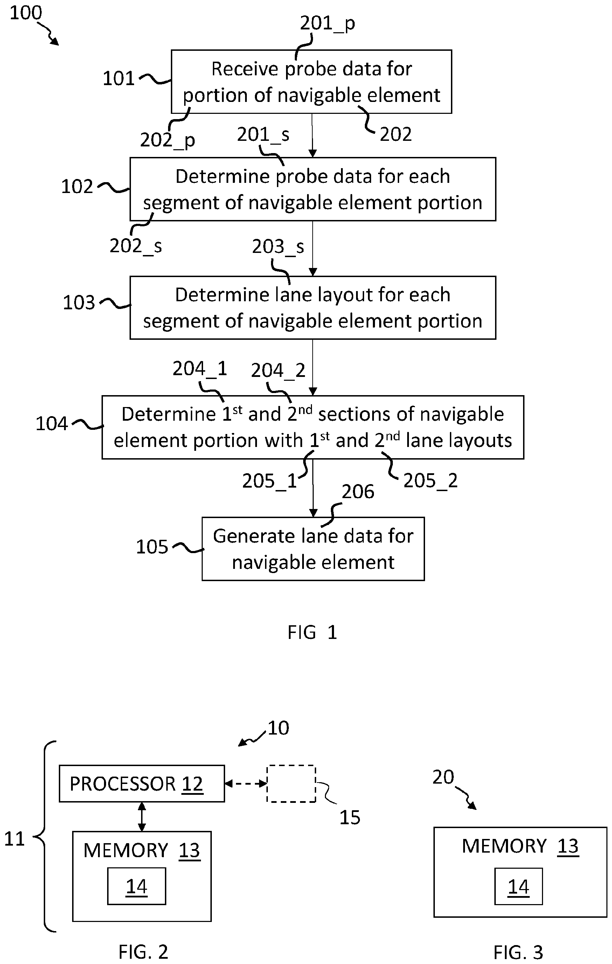

FIG. 1 schematically illustrates a flow chart of an example of a method 100.

One or more of the features discussed in relation to FIG. 1 can be found in one or more of the other FIGs. During discussion of FIG. 1, use will be made of reference numerals of features shown in other FIGs for the purposes of explanation.

The blocks illustrated in FIG. 1 can represent actions in a method, functionality performed by an apparatus, and/or sections of instructions/code in the computer program. In this regard, the component blocks of FIG. 1 are functional and the functions described can be performed by an apparatus (such as apparatus 10 described with reference to FIG. 2). The functions described can also be implemented by a computer program (such as computer program 14 described with reference to FIGs. 2 and 3).

In the example method shown in FIG. 1, the method 100 is for generating map data, namely lane data for use in a digital map.

The digital map, also known as an electronic map, comprises map data representative of longitudinal portions of navigable elements of a network of navigable elements in a geographical region. In the digital map, each longitudinal portions is defined, at least in part, by an edge (or link) between two nodes. The edges/links may be "directed", in that a direction of travel along the portion of the navigable element represented by the edge/link may be indicated.

The digital map may define/represent a road network via a graph comprising links and nodes (logical connection of links). The links correspond to the roads, often discretized in "(road) portions" or, to emphasize a directionality of the road "directed links". Each road portion/link may also have meta-data, such: a road name, speed limit, number of lanes etc. The digital map may also comprise information indicative of a *centre line* that defines a geometry of the road. The centre line may be a polyline (that describes a shape/curvature of the link) that defines a "middle of the road".

Such digital maps may be used for route calculation and/or route guidance, not least by Portable Navigation Devices, PNDs, or other portable computing devices (not least such a smart phones) that include Global Navigation Satellite System, GNSS, (such as Global Positioning System, GPS) signal reception and processing functionality for positioning/determining a location of the device. In this regard, such devices may have the capability to determine one or more: "fixes", "raw" GNSS fixes or "enhanced" fixes - each fix being a time-stamped geo-position. Such PNDS/devices are well known and are widely employed as in-car or other vehicle navigation systems.

Such devices may periodically determine and log their own position as a function of time, for example every five seconds, so as to generate a sequence of data points indicative of time-stamped geographic positions. Such time-stamped geographical positional data collected by such devices can be referred to as "probe data". The probe data may be provided/transmitted to, for example, a remote/central server for collation and processing. Positional data from a single device (e.g. a single "probe" or single "probe vehicle"), i.e. a series/sequence of positions obtained over time, can be referred to as a "probe trace" or simply "trace". In this regard a probe trace/trace can be seen as time-stamped positions from the same device/vehicle. hence, each probe trace may represent movement of a single device/vehicle over a navigable network along navigable elements thereof. Probe data can be considered as comprising a plurality of probe traces from a respective plurality of devices. The devices can also log other associated data (not least such as speed and/or direction of travel, as well as other sensor-derived observations/sensor data). Such associated data along with the positional data obtained from the devices can be included in the probe data. Alternative terms for probe data include: Floating Car Data, FCD; extended FCD (where associated data is also included with the positional data and wherein the associated data may be used to enhance the accuracy); and vehicle probe data (wherein the probe data is obtained from devices associated with vehicles - e.g. vehicles which the devices are in). References herein to probe data should be understood as being interchangeable with these terms as well as with positional data. Positional data may be referred to as probe data for brevity herein.

In the following discussion of examples of the disclosure, the navigable elements will be referred simply as roads, and the network of navigable elements is a road network. However, it is to be appreciated that in other examples, a navigable element could be a: foot path, hiking trail, cycle path, canal, tow path, river, railway line, or the like.

In block 101, probe data 201_p, for a longitudinal portion 202_p of a road 202, is received. The probe data comprises a set of a plurality of positions of a plurality of devices (e.g. not least PNDs) that have traversed along the longitudinal portion of the road.

The probe data 201_p for the longitudinal portion of the road (it being noted that such a road portion is represented/defined, in the digital map, by an edge/link between two nodes) may comprise a set of traces for the road portion, namely a set of portions of traces that are associated with/matched to the road portion (i.e. following performance of a match matching process to match/associate parts of the probe data/traces to the road portion). Such probe data/traces thereby correspond to a set of positions, along the road portion, of vehicles as they traversed along the road portion.

The probe data/set of traces for the road portion may correspond to a portion of an overall data set of probe data/set of traces collected over at least a part of a road network in a particular geographic region, wherein the part of the road network includes at least the road portion. In this regard, the overall data set of probe data/set of traces for the road network may be, in effect, 'filtered' such that only the portion thereof that comprises probe data/set of traces for the road portion are selected to form the probe data/set of traces for the road portion.

The probe data may be collected over a collection time period, which could be of the order of minutes, hours, days or weeks. The probe data could be historical probe data, substantially current probe data (e.g. collected within the last few days or hours); and/or real-time probe data (e.g. collected within the last hour).

In block 102, a subset of the probe data 201_p is determined, for each of a plurality of segments 202_s of the road portion 202_p. Each such probe data subset for each segment of the road portion thereby defines probe data 201_s for each segment of the road portion 202_p.

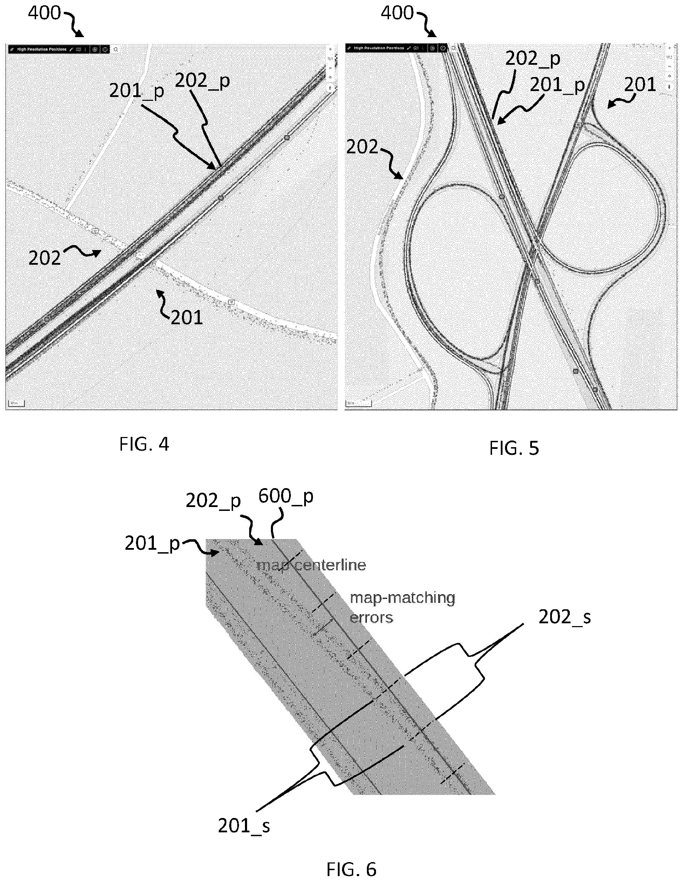

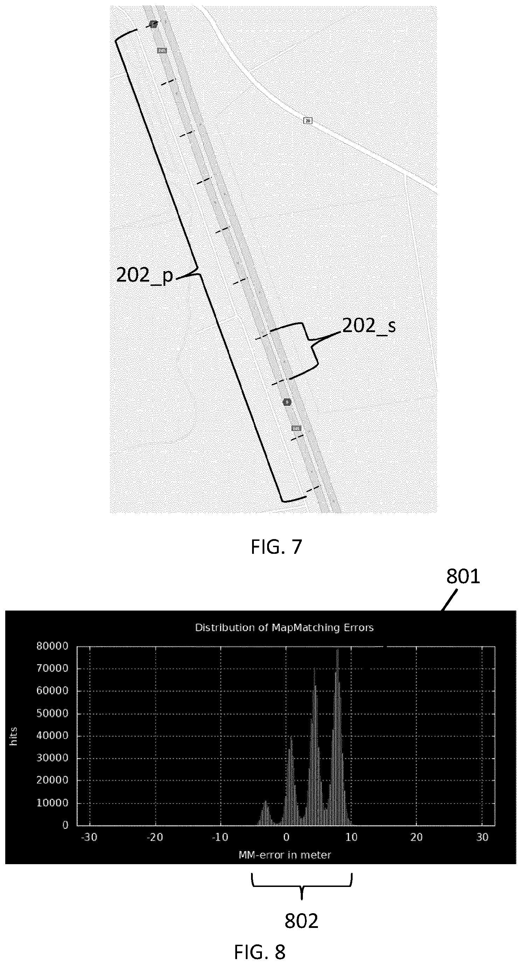

In this regard, as discussed further with regard to the examples of FIGs. 6 and 7, the road portion 202_p may be divided up/segmented in to a plurality of segments 202_s, e.g. N segments wherein N may be greater than: 2, 5, 10 or 50. By partitioning each road portion into a plurality of segments, each segment is inherently shorter than each road portion. Since each road portion is represented in the digital map by an edge/link between two nodes, each segment length is different to and less than the digital map's edge/link length. For instance, whilst the edge/link length for representing the road portion may be of the order of hundreds of metres, the segment length may be of the order of tens of metres, e.g. less than: 25 metres, 50 metres, 75 metres or 100 metres. In this regard, the segment length may be smaller than the distance it takes a driver to perform a typical lane-changing manoeuvre (e.g. of the order of about 100 metres). As will be discussed further below, the use of such segment sizes that are distinct from the road portion/map link length enables identification of layout changes at an individual lane level.

After the road portion has been split up into plural segments, probe data 201_s for each segment is determined, i.e. the subset/part of the probe data 201_p for the road partition that corresponds to a particular segment is selected to form the probe data 201_s for the particular segment.

In block 103, lane layout information 203_s is determined, for each segment, based on the probe data 201 _s for each segment. The lane layout information for each segment comprises information indicative of: a number, usage and/or geometry of lanes in the respective segment.

The digital map may represent/define a geometry of the road via a reference line, the reference line having a known geometry as stored in map data for the digital map. The probe data 201 _s for each segment may comprise a plurality of positions associated with/map matched to the respective segment (i.e. indicative of movement of each vehicle along the segment. The determination of lane layout information for each segment may comprise determining, for each segment, a plurality of lateral offsets of the plurality of positions with respect to the reference line (e.g. as shown and discussed further below with respect to FIG. 7).

For each segment, the plurality of lateral offsets for the respective segment are aggregated and used to determine a distribution of the plurality of lateral offsets for the respective segment. In this regard, a histogram of the plurality of lateral offsets the respective segment may be determined (e.g. as shown and discussed further below with respect to FIG. 8).

Based on the distribution of the plurality of lateral offsets (e.g. based on a number, position and width of the histograms maxima/peaks) lane layout information for each segment can be determined. For instance, at least one of:
a number of lanes of the respective segment;
a usage of one or more lanes of the respective segment; and
a geometry of one or more lanes of the respective segment.

In block 104, at least first 204_1 and second 204_2 sections of the road are determined based at least in part on the lane layout information for each segment. The first section of the road comprises/consists of a first set of consecutive segments having a first lane layout, whereas the second section of the road comprises a second set of consecutive segments having a second lane layout different to the first lane layout. In this regard, the first section of the road can be considered to be a first homogeneous section of the road formed of a sequence/set of consecutive segments that all have the same lane layout (e.g. the same a number, usage and/or geometry of lanes). Whereas the second section of the road can be considered to be a second, different, homogeneous section formed of a sequence/set of consecutive segments that all have the same lane layout, albeit a differing lane layout to that of the first homogeneous section.

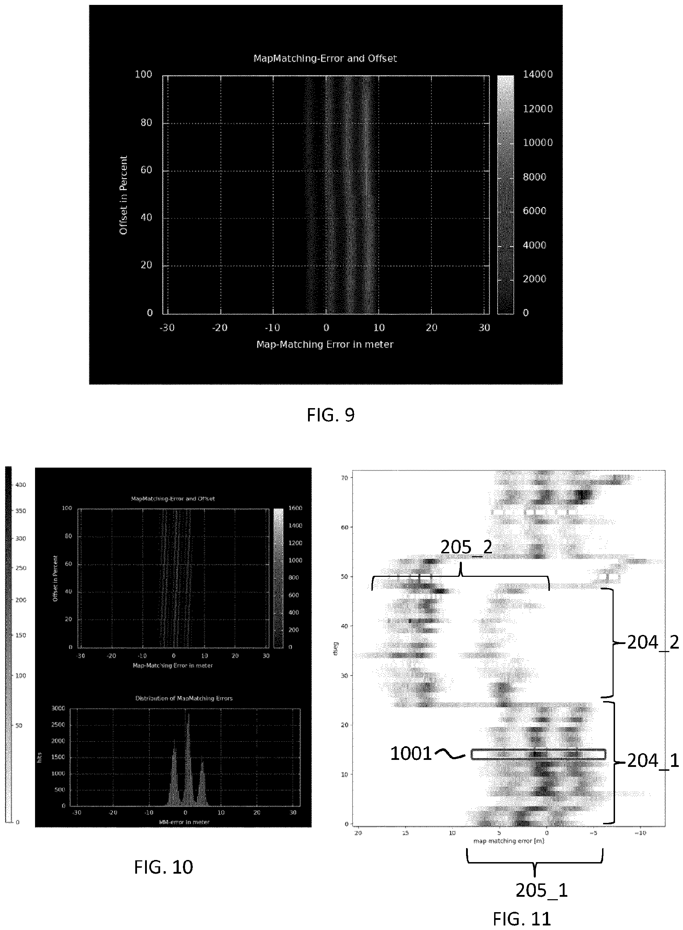

An example of determining first 204_1 and second 204_2 homogeneous sections is discussed further below with regard to the examples of FIGs. 10 to 14.

For each of the first and second homogenous sections, the following might be determined:
a start position of the respective section;
an end position of the respective section; and
the lane layout of the respective section.

The determination of such information may be used to determine a type and a position of a change of lane layout of a road. The position of such a change of lane layout may correspond to the position where the first and second homogenous sections meet.

In block 105, lane data, indicative of a change of lane layout, for the road is generated based at least in part on the first and second homogeneous sections.

The generated lane data may be one or more of: map data, map update data or temporary map data indicative of a change of lane layout. For instance, the lane data may be indicative of a change in lane layout between the last segment of the first homogeneous section of the road and the next segment of the road, i.e. the first segment of the second homogeneous section of the road.

The digital map may provide an indication of a reference lane layout for the road and the generation of the lane data for the road may take the reference lane layout into account such that the generated lane data may comprise information indicative of at least one of:
a different lane layout to the reference lane layout;
a modification to the reference lane layout; and
a temporary adjustment to the reference lane layout.

The generated lane data may be indicative of at least one of:
a lane closure (i.e. a specific lane is closed/blocked for driving along);
a lane re-opening (i.e. a specific lane is no longer closed/blocked and can be driven along);
a contraflow lane (i.e. a temporary road layout wherein one or more lanes normally used for a first driving direction are temporarily shared with road infrastructure for the opposite driving direction. On highways, opposite driving directions are typically physically separated);
a change of lane usage (i.e. a change in usage as compared to a usage indicated in map data of the digital map, e.g. temporary usage of a hard shoulder lane for traffic during roadworks);
a change of lane number (i.e. a change in lane number as compared to a usage indicated in map data of the digital map); and
a change of lane geometry (i.e. a change in geometry [such as: dimension, position and/or a shape] of a lane as compared to a geometry indicated in map data of the digital map).

The generated lane data may be 'lane-level' map data, i.e. map data which is associated with one or more particular/individually specified lanes of a road (e.g. indicative of which particular/specific lane(s) of a road are closed/re-opened). Such 'lane-level' map data is to be compared and contrasted to mere "road-level" map data which is associated with a road (and not an individual/specific lane) and which merely indicates closure/re-opening of one or more non-specified lanes of the road.

In this regard, the lane layout data for the road may comprise information indicative of at least one of:
which particular one or more lanes of the road has undergone a change of lane layout; and
a position of the change of lane layout.

Generating the lane data for the road may comprise generating a position associated with the change of lane layout. The position may be based at least in part on:
a determined position where the first and second sections of the navigable element abut; or
a determined position between the first and second sections of the navigable element.

In some examples, the method further comprises at least one or more of performing a map matching process to:
associate at least a portion probe data for a road network (i.e. an overall data set of probe data for a geographic region of a road network that encompasses the road) to the road in order to form probe data for the road;
associate at least a portion of probe data for the road network/road to the road portion in order to form probe data for the road portion; and
associating at least a portion of probe data for the road network/road/road portion to each of the plurality of segments of the road portion in order to form probe data for the road segment.

Whilst the above example has been described with regards to determining lane data for a portion of a road of a road network represented by the digital map, it is to be appreciated that the method can be repeated, mutatis mutandis, for other portions of the road. Likewise, the method can be repeated, mutatis mutandis, for other roads of the road network. Similarly, whilst the description refers to determining first and second homogenous sections of the road portion, one or more further homogenous sections of the road portion could be determined.

It will be understood that each block and combinations of blocks illustrated in FIG. 1 and the above-described functionality, as well as the further functionality described below, can be implemented by various means, such as hardware, firmware, and/or software including one or more computer program instructions. For example, one or more of the functions described above can be performed by a duly configured apparatus (such as server or computing device comprising means for performing the described functionality). One or more of the functions/functionality described above can be embodied by a duly configured computer program (such as a computer program comprising computer program instructions which embody the functions/functionality described above and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions/functionality specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions/functionality specified in the blocks and described in the present description.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

FIG. 2 schematically illustrates a block diagram of an apparatus 10 for performing the methods and functionality described in the present disclosure and illustrated in FIGs.1 and 6 - 16. The component blocks of FIG. 2 are functional and the functions described can be performed by a single physical entity.

The apparatus comprises a controller 11, which could be provided within a computing device, not least for example such as a server.

While in certain implementation examples, the apparatus can be provided in a server, other types of electronic devices, such as, but not limited to: PNDs, GPS devices, mobile communication devices, hand portable electronic devices and other types of electronic systems, can readily employ examples of the present disclosure.

The controller 11 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 11 can be as controller circuitry. The controller 11 can be implemented in hardware alone, have certain aspects in software including firmware alone or can be a combination of hardware and software (including firmware).

The controller 11 can be implemented using instructions that enable hardware functionality, for example, by using executable instructions of a computer program 14 in a general-purpose or special-purpose processor 12 that can be stored on a computer readable storage medium 13, for example memory, or disk etc, to be executed by such a processor 12.

The processor 12 is configured to read from and write to the memory 13. The processor 12 can also comprise an output interface via which data and/or commands are output by the processor 12 and an input interface via which data and/or commands are input to the processor 12. The apparatus can be coupled to or comprise one or more other components 15 (not least for example: input/output user interface elements and/or other modules/devices/components for inputting and outputting data/commands).

The memory 13 stores instructions such as a computer program 14 comprising such instructions (e.g. computer program instructions/code) that controls the operation of the apparatus 10 when loaded into the processor 12. The instructions of the computer program 14, provide the logic and routines that enables the apparatus to perform the methods, processes and procedures described in the present disclosure and illustrated in FIGs. 1 and 6-16. The processor 12 by reading the memory 13 is able to load and execute the computer program 14.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 13 is illustrated as a single component/circuitry it can be implemented as one or more separate components/circuitry some or all of which can be integrated/removable and/or can provide permanent/semi-permanent/ dynamic/cached storage.

Although the processor 12 is illustrated as a single component/circuitry it can be implemented as one or more separate components/circuitry some or all of which can be integrated/removable. The processor 12 can be a single core or multi-core processor.

The apparatus can include one or more components for effecting the methods, processes and procedures described in the present disclosure and illustrated in FIGs. 1 and 6 - 16. It is contemplated that the functions of these components can be combined in one or more components or performed by other components of equivalent functionality. The description of a function should additionally be considered to also disclose any means suitable for performing that function.

Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be a client device, a server device, a wireless communications device, a hand-portable electronic device, a PND, a mobile cellular telephone etc. The apparatus can be embodied by a computing device, not least such as those mentioned above. However, in some examples, the apparatus can be embodied as a chip, chip set, circuitry or module, i.e. for use in any of the foregoing.

In some examples, the apparatus comprises:
at least one processor 12; and
at least one memory 13 storing instructions that, when executed by the at least one processor 12, cause the apparatus at least to:
   receive probe data for a longitudinal portion of a navigable element, wherein the probe data comprises a set of a plurality of positions of a plurality of devices that have traversed along the longitudinal portion of the navigable element;
   determine, based at least in part on the probe data, a subset of the probe data for each of a plurality of segments of the longitudinal portion of the navigable element of the network;
   determine, based at least in part on the subset of probe data for each segment, lane layout information for each segment, wherein the lane layout information for each segment comprises information indicative of: a number, usage and/or geometry of lanes in the respective segment;
   determine, based at least in part on the lane layout information for each segment, at least first and second sections of the navigable element, wherein the first section of the navigable element comprises a first set of consecutive segments having a first lane layout, and wherein the second section of the navigable element comprises a second set of consecutive segments having a second lane layout different to the first lane layout;
   generate, based at least in part on the first and second sections of the navigable element, lane data for the navigable element wherein the lane data is indicative of a change of lane layout.

The above described examples find application as enabling components of: digital mapping systems, navigation systems, routing and guidance systems and related software and services.

FIG. 3, illustrates a computer program 14 which may be conveyed via a delivery mechanism 20. The delivery mechanism 20 can be any suitable delivery mechanism, for example, a machine readable medium, a computer-readable medium, a non-transitory computer-readable storage medium, a computer program product, a memory device, a record medium such as a solid-state memory or an article of manufacture that comprises or tangibly embodies the computer program 14. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus (such as apparatus 10 of FIG. 2), cause the apparatus to perform at least the following or for causing performing at least the following:
receive probe data for a longitudinal portion of a navigable element, wherein the probe data comprises a set of a plurality of positions of a plurality of devices that have traversed along the longitudinal portion of the navigable element;
determine, based at least in part on the probe data, a subset of the probe data for each of a plurality of segments of the longitudinal portion of the navigable element of the network;
determine, based at least in part on the subset of probe data for each segment, lane layout information for each segment, wherein the lane layout information for each segment comprises information indicative of: a number, usage and/or geometry of lanes in the respective segment;
determine, based at least in part on the lane layout information for each segment, at least first and second sections of the navigable element, wherein the first section of the navigable element comprises a first set of consecutive segments having a first lane layout, and wherein the second section of the navigable element comprises a second set of consecutive segments having a second lane layout different to the first lane layout;
generate, based at least in part on the first and second sections of the navigable element, lane data for the navigable element wherein the lane data is indicative of a change of lane layout.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

There now follows a discussion of an example method of determining lane data. The method provides lane level precision in identifying and reporting road obstructions, i.e. identifying obstructions (closure/blockage) on an individual lane basis, so as to enable generation of live traffic lane closure information.

In high-level broad overview, the method comprises the following processing steps:
i) Map-match probe data/aligned trace data to a road portion
ii) Process the map-matched data
iii) Identify a geometric lane layout of the road portion
iv) Identify homogenous sections of the road
v) Interpret the sections
vi) Encode the sections (e.g. convert the interpretant content/lane data into a format for machine-to-machine communication (such as server to client)

The primary input data for the method is probe data (which may also be referred to as traces data), which is then map matched to a digital map. Such map matched probe data may be referred to as aligned traces.

Conventional probe data, such as GNSS location data (i.e. geo-positions provided by individual probes/probe vehicles using GNSS sensors such as sat-nav devices and/or GPSs), may be used as the probe data source/source traces that are to be aligned (or map-matched) to a road represented in a digital map.

Alternatively or in addition, enhanced GNSS location data may be used as the source positioning data, not least such as TomTom's "TraceR" positioning data. Wherein the location precision of GNSS location data may be increased by:
fusing it with other sensor-derived observations (SDO) and odometry sensor information ("refinement"), and
employing smoothing-and-mapping to align multiple traces together ("alignment").

Such refinement of GNSS location data may provide enhanced GNSS location data in which an error/variation in a lateral direction (i.e. perpendicular to a longitudinal direct/direction of movement of the probes) is smaller, which may facilitate identifying, distinguishing and separating differing lane layouts.

FIGs. 4 and 5 illustrates two examples of map matched/aligned probe data 202 (shown as plural individual location data points of GNSS locations/fixes) laid over a digital map 400 of a geographic region having a network of roads 202. A portion of one of the roads is indicated with reference 201_p, and the probe data for that portion is indicated with reference 201_p.

The locations (time-stamped list of positions) from individual probes ("traces") are map-matched to a digital map. In this regard, a map-matching algorithm may be applied to the probe data to match/assigned each traces (i.e. each set/list of locations of each probe) to a link in a digital map, wherein the link (i.e. and edge between two nodes) represents/defines a longitudinal portion of a road. The link may be a directed link indicative of a direction of use/travel along the link.

The map matching/alignment process effectively results in a logical assignment of individual positions to a road. From this, one may derive map matched/aligned probe data 201_p for a portion of a road 202_p.

FIG. 6 illustrates an example of map matched/aligned probe data 201_p (shown as plural individual dots representative of location data points of GNSS locations/fixes) for a road portion 202_p (wherein the road portion 202_p is represented/defined in the digital map via a link between two nodes). In this Figure, the probe data for the road portion is shown overlayed a representation of a road portion 202_p.

The road is also defined in the digital map via a centre line. Consequently, each portion of the road is also defined in the digital map via a respective portion of the centre line. The portion of the centre line 600_p is shown in the Figure.

Each individual position/location data points of the GNSS locations/fixes of the probe data for the road portion) is projected to the map's center line. Each projection is a projection perpendicular to the central line. For each position, the length of each projection is calculated. In this regard, each projection length corresponds to a separation distance/displacement between an individual position and the center line, in a direction perpendicular to the centre line.

One may consider that each projection, for each position of the probe data for the road portion, is a lateral projection; and that each separation distance is a lateral offset.

The road portion 202_p is itself sub-divided into a plurality of segments 202_s, wherein each road segment has its own associated probe data 201_s (i.e. a subset of the probe data that is map-matched/aligned to the road segment 202_s).

FIG. 7 shows a further examples of a portion 202_p of a road (in this instance a part of a digital map showing a portion of the German Highway A9, whose southbound direction has four lanes and a hard shoulder lane). Also shown are a plurality of segments 202_s into which the road portion 202_p is partitioned (the road portion 202_p itself being represented/defined by a single link/edge between two nodes in a digital map). Each road segment 202_s is associated with its own respective probe data 201_s (not shown in FIG. 7)

Map-matching errors for each road segment are evaluated. In this regard, lateral offsets (relative to the center line) for each position of the probe data 201 _s for a road segment 202_s are calculated.

FIG. 8 shows a histogram of map-matching errors/ lateral offsets 801 for probe data 201_s for a single road segment 202_s, i.e. the road segment 202_s of FIG.7.

The distribution of the map-matching errors (aggregated over a certain time interval - in this instance 3 months) reflects the four lanes of the road segment of FIG. 7 via the four peaks in the frequency plot (since, in the 3 month time interval, no vehicles used the hard shoulder lane, there is no peak for the hard shoulder lane). Positive map-matching errors are located left from the map center line indicating a preference towards the left (faster) lanes of the southbound road portion.

The 'bin' of the histogram corresponds to the longitudinal length of the road segment. In this example the bin size/ length of the road segment is 20m. It will be appreciated that this configuration parameter can be varied/duly optimized for a given road (e.g.: highway, main road, urban road). However, significantly, each road segment length different to, and less than, the length of the road portion (and hence is less than the representative length of the link/edge that defines the road portion in the digital map).

The bin length/segment length is selected so as to provides a sufficiently fine longitudinal resolution to be independent of other discretizations (i.e. a length of road portions - e.g. of the order of hundreds of meters). Also, the bin/segment length may be selected so as to be smaller than a length involved in performing a typical lane-changing maneuvers (about 100m). Such bin/segment lengths may enable identification of deviations/changes on a lane level (e.g. start/end positions in a longitudinal direction along the length of the road portion, and identification of discrete lanes and their relative position in a lateral direction transverse to the longitudinal direction of the road portion).

FIG. 9 shows the map matching errors for the entire road portion 202_p of FIG. 7. In this regard, FIG. 9 shows the map matching errors for the link of the digital map that represents/defines the road portion 202_p. Here it can be seen that the lane layout of the road portion is substantially the same/homogenous along its length (which is indicative of no changes of lane use, closures, re-openings, contraflows) of the lanes.

FIG. 10, the upper part thereof, shows an example of map matching errors along a length of a single road segment 202_s of a road portion 202_p. The lower port of FIG. 10 shows an example of a histogram of the map matching errors for a road segment 202_s of a road portion 202_p.

Map matching errors are calculated for all segments of the road portion 202_p.

FIG. 11, shows an example of map matching errors along a length of an entire road portion 202_p, which essentially corresponds to an ordered set/sequence of all the map matching errors of all the road segments 202_s of road portion. From this, individual lanes and a geometric lane layout, along with sections of homogeneous lane layouts/usage can be identified. In this regard, a first homogenous section 204_1 has a first lane layout 205_1 (3 lanes), and a second homogenous section 204_2 has a second lane layout 205_2 (1 lane and 2 contraflow lanes).

In the example of FIG. 11, the frequency of map-matching errors for a set of about 70 road segments (which would be directed segments and which may be abbreviated as "dsegs").

FIG, 10 corresponds to a detailed distribution data for a single segment of FIG. 11 that is indicated via the red box 1001.

The example of FIG. 11 shows a complex situation in which there are several lane layout changes.

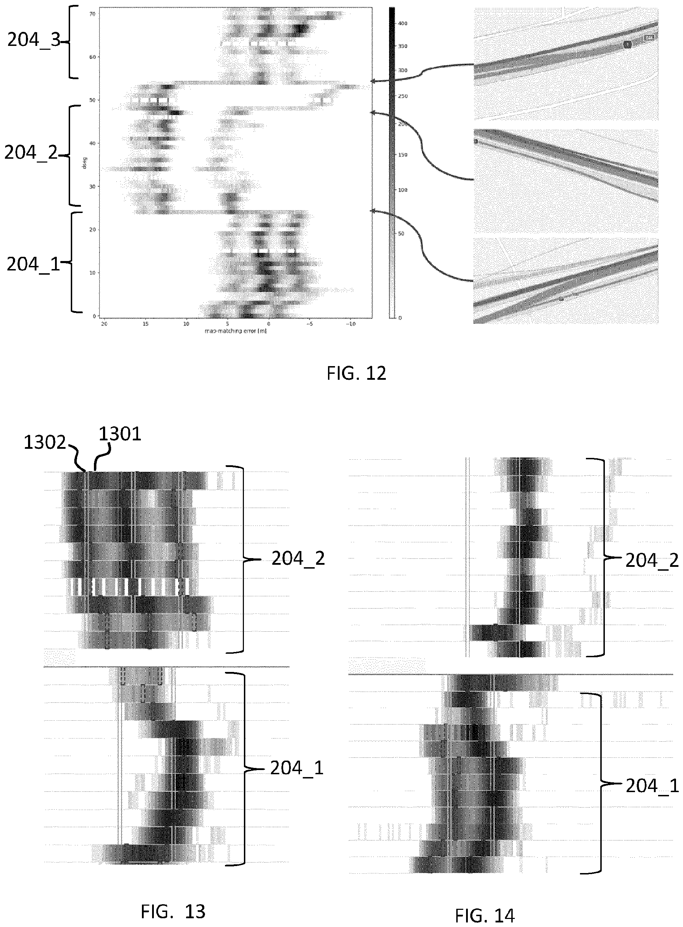

FIG. 12 shows the distribution of map matching errors of FIG. 11 for a sequence of 70 road segments (70 "dsegs") along a road portion along with a part of a digital map showing various of the related road segments.

The relative offset of the map-matching error allows for identification the following:
· Change of two lanes to contraflow at around dseg 24 (the aligned traces show this for the eastbound driving direction) while one lane remains in the original left lane.
· At about "dseg" 48 the single lane turns to the right allowing for exiting the highway.
· At about segment 54 the two contraflow lanes are led over to the original geometry.

From the distribution of the map-matching errors of FIGs. 11 and 12, it can be determined that initially, for around the first 24 segments, all 3 lanes are open and in use. This equates to a sequence of 24 segments all having the same lane layout 205_1. A first homogeneous section of the road 204_1 is defined based on such a sequence of segments with the same lane layout 205_1.

At around 25 segments along the road portion, the lane layout changes, two of the lanes are closed and two new lanes are opened, in view of the position of the new lanes, it can be interpreted that the newly opened lanes are contraflow lanes. This new lane layout 205_2 persists for around 24 segments. A second homogeneous section of the road 204_2 is defined based on this second sequence of segments all having the same lane layout 205_2 (albeit a different layout to that of the first homogeneous section). Around 54 segments along, the contraflow lanes are closed and all 3 lanes are used/re-opened. Thereafter the remaining segments have the same layout/geometry (all 3 lanes once more being open and in use), thus defining a third homogeneous section 204_3.

Via the above described processing steps:
· individual lanes for each road segment can be identified from the data
· map matching errors/lateral offsets can be used/interpreted to identify a geometric lane layout along a road portion (the road portion comprising a sequence of ordered road segments)
· lane layouts/lane usage in homogenous sections along the road portion can be identified and classified.

A statistical data model may be used to identify and determine lanes, their usage as well as lane layout/geometry of each road segment.

In Figs 13 and 14, further examples of map matching errors/lateral offsets for a sequence of a plurality of road segments of one or more road portions are shown. Also shown are first and second homogenous sections 204_1 and 204_2 each comprising a sequence of segments having the same first and second lane layout/usage respectively.

A statistical model may be used to determine core areas of individual lanes per segment (indicated via 1301 shown as boxes with dashed lines) and connect the same to topologically connected and relevant lanes along the one or more road portion(s) (indicated via 1302 shown as solid lines).

FIG. 13 shows an example of a transition from one to three lanes, thus the end of a two-lane closure (the driving direction is upwards in this example). In FIG.13, the resulting two sections of homogeneous lane layouts 204_1 and 204_2 are visually separated by a "empty row" as separator.

FIG. 14 shows an example wherein the start of a lane closure is illustrated. Two lanes are reduced to one lane leading to two separated homogeneous sections 204_1 and 204_2 (in this example the left lane is closed):

The lane layouts may vary over time. Therefore, the geometric lane layouts for sections and evaluation of homogeneous sections for the determination of lane layout/usage data may be processed and evaluated on incremental updates (not least for example daily).

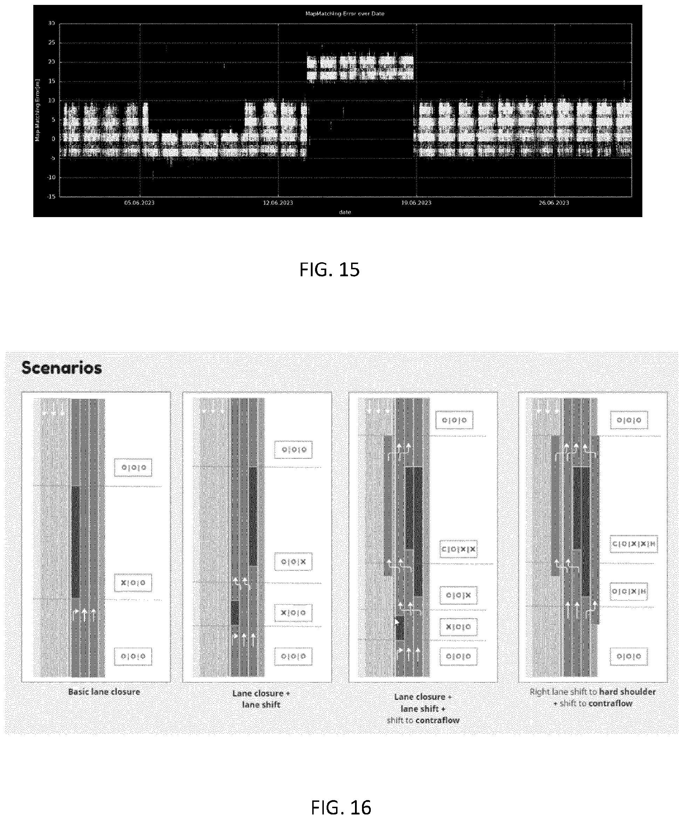

FIG. 15 illustrates an example of changes of lateral offsets for a single road segment over time. This shows short-term/temporal lane layout changes varying over time for the road segment. Such short-term lane layout changes can be found in an historic time series for a single map segment (dseg), e.g., for the four lanes of the A9 shown in FIG. 7. This figure shows a lane closure from four to two lanes (from June 5th to 10th) and a reduction to two lanes in contraflow direction (from June 13th to 18th):

The identified homogeneous sections and lane data based on the same need to be interpreted and formally described (such as "encoded") for client applications. The most relevant information comprises a description of the lane layout in space. Other relevant information may include meta data such as times (e.g., a start time for a specific lane layout, such as when a lane's usage changed), quantitative indicators about the lateral offsets/shifts, or quality indicators like precision and confidence.

The identified sections of homogeneous lane layouts (e.g. with constant lane counts) may be directly translated into a linear reference along a location or road portion. The transitions between homogeneous sections may be described by longitudinal offsets (e.g. in driving direction). The lateral layout may be addressed by a discrete indicator per lane index.

FIG. 16 depicts fours example use scenarios.

The first example describes a basic single lane closure "x" while two lanes are still usable "o". Such a lane layout is indicated by "x|o|o". In addition, the situation upstream and downstream of the lane closure are indicated, wherein all the lanes are usage - such a lane layout being indicated by "o|o|o".

The second example describes lane closure and a lane shift. In this, there is a closure of the left lane (indicated by "x|o|o") followed by closure of the right lane (indicated by "o|o|x"). Again, the situation upstream and downstream of the lane closure are indicated as well (both indicated by "o|o|o").

The third example describes a lane closure, a lane shift and a shift to contraflow "c". The lane layout shown of the homogenous section which uses a contraflow is indicated by "c|o|x|x".

The fourth example describes a right lane shift to hard shoulder "H" and a shift to contraflow. The lane layout shown of the homogenous section which uses the hard shoulder and contraflow is indicated by "c|o|x|x|H".

Such lane indexing and indications provide lane-level lane data indicative of lane layout and uses of each specific individual lane. This may enable complex combinations of lane relations to be classified robustly for a formal yet accurate description for subsequent downstream communication to client systems.

Various examples of the disclosure may make use of positioning data/probe-based data with increased location precision using sensor-derived observations (SDO). This may allow for crafting new innovative traffic products (namely lane data as discussed above) beyond the status quo built upon conventional/live GNSS data. Using such highly precise location data from individual probe vehicles may enable the detecting lane layouts e.g. lane closure information a temporary roadworks situation, and reporting the same to a server for distribution to client navigations devices.

The higher the volume of connected vehicles providing SDO data the faster the required statistical significance will be reached.

The enhanced input data allows for a more detailed traffic product describing subsequent sections with their lane layouts. Such highly precise and reliable service is suited for both supporting human and automated driving, e.g. in complex roadworks situations.

Advantageously, examples of the disclosure may enable the generation of lane data that can be used to improve routing (indeed a multi-lane road with fewer open lanes may affect a flow of traffic along the road, and hence the speed along the road and hence an Estimated Time of Arrival (ETA) via the road) and also improve driving guidance (by forwarding a driver of upcoming changes in lane layout. This may also improve safety, such as in roadworks situations with temporarily changed lane layouts that are not (yet) part of a digital map.

The generated lane data may be used to support driving tasks in complex situations for both humans and automated systems - not lest such as Advanced Driver Assistance Systems (ADAS). ADAS is a generic term for referring to automated or assisted driving. The levels of driving automation are typically classified by levels from 0 (no driving automation) to level 5 (full automation). Nowadays level 3 (conditional automation) is realized on highways below a certain speed so that the automated system instead of the human monitors the driving environment.

Potential use cases for lane data generated in accordance with the present disclosure include:
Level 0 (no automation, passively using the information in displays):
   · Visualization of the effective temporary lane layout (in contrast to an eventually outdated lane layout map)
   · Visualization of upcoming critical (thus safety relevant) lane layout changes (e.g., lane closures)
   · Visualization of lane guidance (for better informed decision making to change lanes)
Level 1 (driver assistance):
   · Providing lane-choice recommendations (for switching to an open lane, to a (faster) contraflow lane, etc)
   · Assisting the human in taking lane-changing decisions (e.g., warning to change to a lane that is closed upstream, or pro-actively change to an open lane if being in one to be closed upstream)
Level 2 (partial automation):
   · Existing "lane assistance" systems can be made aware of the temporary lane layout for improving the interaction between the driver and lane assistance feedback (e.g., lane narrowing and lane swings in the context of contraflow lanes)
   · The virtual horizon about upcoming lane closures allows a vehicle to steer into an open lane (that is a strategic level of lane choice decisions)
Level 3 (conditional automation):
   · The virtual horizon can be used for a better "hand-over" to the human in inherently complex driving situations (which takes some time in level 3 mode). The relevance and confidence of the provided virtual horizon can support a conditional decision making when a hand-over is needed, and when not.

In general, the lane data may be used to determine/predicts lane closures, contraflows, hard shoulder usage situations as well as narrow lanes and provide appropriate warnings, guidance and routing in view of the same.

Examples of the disclosure may provide processing scheme that can robustly allow for detecting a lane layout in both space (e.g. positions and dimensions, such as lateral and longitudinal positions of lanes, and widths of lane) and time (e.g. when lane layout change occurred and reverted back to normal).

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determine/determining" (and grammatical variants thereof) can include, not least: evaluating, calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of transmitting information should also be considered to disclose enabling, and/or causing, and/or controlling transmitting information. Similarly, for example, a description of an apparatus transmitting information should also be considered to disclose at least one means or controller of the apparatus enabling, and/or causing, and/or controlling the apparatus to transmit the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter, or value of a parameter, should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', `can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of `at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A computer-implemented method for generating lane data for use in a digital map, wherein the digital map comprises data representative of longitudinal portions of navigable elements of a network of navigable elements in a geographic region, and wherein each longitudinal portion is defined, in the digital map, at least in part by an edge between two nodes; the method comprising:
receiving probe data for a longitudinal portion of a navigable element, wherein the probe data comprises a set of a plurality of positions of a plurality of devices that have traversed along the longitudinal portion of the navigable element;
determining, based at least in part on the probe data, a subset of the probe data for each of a plurality of segments of the longitudinal portion of the navigable element of the network;
determining, based at least in part on the subset of probe data for each segment, lane layout information for each segment, wherein the lane layout information for each segment comprises information indicative of: a number, usage and/or geometry of lanes in the respective segment;
determining, based at least in part on the lane layout information for each segment, at least first and second sections of the navigable element, wherein the first section of the navigable element comprises a first set of consecutive segments having a first lane layout, and wherein the second section of the navigable element comprises a second set of consecutive segments having a second lane layout different to the first lane layout;
generating, based at least in part on the first and second sections of the navigable element, lane data for the navigable element wherein the lane data is indicative of a change of lane layout.

2. The computer-implemented method of any previous claim, wherein the change of lane layout comprises at least one of:
a lane closure;
a lane re-opening;
a contraflow lane;
a change of lane usage;
a change of lane number; and
a change of lane geometry.
a lane closure;
a lane re-opening;
a contraflow lane;
a change of lane usage;
a change of lane number; and
a change of lane geometry.

3. The computer-implemented method of any previous claim, wherein the digital map provides an indication of a reference lane layout for the navigable element, and wherein the lane data for the navigable element layout comprises information indicative of at least one of:
a different lane layout to the reference lane layout;
a modification to the reference lane layout; and
a temporary adjustment to the reference lane layout.

4. The computer-implemented method of any previous claim, wherein the lane layout data for the navigable element comprises information indicative of at least one of:
which particular one or more lanes of the navigable element has undergone a change of lane layout; and
a position of the change of lane layout.

5. The computer-implemented method of any previous claim, wherein determining the at least first and second sections of the navigable element comprises determining, for each section:
a start position of the respective section;
an end position of the respective section; and
the lane layout of the respective section.

6. The computer-implemented method of any previous claim, wherein generating the lane data for the navigable element comprises generating a position associated with the change of lane layout, and wherein the position is based at least in part on a position:
where the first and second sections of the navigable element abut; or
between the first and second sections of the navigable element.

7. The computer-implemented method of any previous claim, further comprising at least one or more of:
associating at least a portion of the probe data to the navigable element;
associating at least a portion of the probe data to the longitudinal portion of the navigable element; and
associating at least a portion of the probe data to each of the plurality of segments of the longitudinal portion of the navigable element.

8. The computer-implemented method of any previous claim, wherein each of the plurality of segments of the navigable element is associated with a length of the navigable element, and wherein the length is:
less than 100 metres;
less than 75 metres;
less than 50 metres; or
less than 25 metres.

9. The computer-implemented method of any previous claim, wherein a geometry of the navigable element is defined, in the digital map, via a reference line, and wherein determining lane layout information for each segment comprises:
determining, for each segment, a plurality of lateral offsets of the plurality of positions with respect to the reference line.

10. The computer-implemented method of claim 9, wherein determining lane layout information for each segment comprises:
aggregating the plurality of lateral offsets for the respective segment;
determining a distribution of the plurality of lateral offsets for the respective segment; and/or
determining a histogram of the plurality of lateral offsets the respective segment.

11. The computer-implemented method of claim 10, wherein determining lane layout information for each segment comprises determining, based at least in art on the distribution of the plurality of lateral offsets, at least one of:
a number of lanes of the respective segment;
a usage of one or more lanes of the respective segment; and
a geometry of one or more lanes of the respective segment.

12. The computer-implemented method of any previous claim, wherein the probe data comprises:
historical probe data;
substantially current probe data; and/or
real-time probe data.

13. An apparatus comprising means for performing the method of any of the previous claims.

14. A computer program comprising instructions, which when executed by an apparatus, cause the apparatus to perform the method as claimed in any of claims 1 to 12.
